# EUROPÄISCHE PATENTSCHRIFT

(11) **EP 0 785 416 B1**
(45) Veröffentlichungstag und Bekanntmachung des Hinweises auf die Patenterteilung: **13.11.2002**
(21) Anmeldenummer: 96112673.7
(22) Anmeldetag: 06.08.1996
(51) Int. Cl.: G01D 7/04, G01P 1/10

(54) **Für ein Kraftfahrzeug bestimmtes Zeigerinstrument**
Pointer instrument for motor vehicle
Instrument à aiguille pour véhicule

(30) Priorität: 16.01.1996 DE 19601270
(43) Veröffentlichungstag der Anmeldung: 23.07.1997
(73) Patentinhaber: Siemens Aktiengesellschaft, 80333 München (DE)
(72) Erfinder: Wilhelm, Heinz-Günther, 65191 Wiesbaden (DE); Hähl, Manfred, 65843 Sulzbach (DE); Wolf, Helmut, Dr., 65293 Hochheim (DE)

(56) Entgegenhaltungen:
- CH-A- 659 321
- DE-A- 3 201 571
- DE-C- 673 563
- US-A- 3 889 187
- US-A- 4 761 715

## Beschreibung

Die Erfindung betrifft ein für ein Kraftfahrzeug bestimmtes Zeigerinstrument mit einem Zeiger, einem eine Skala aufweisenden Zifferblatt und einer Sollwertmarkierung auf dem Zifferblatt.

Solche Zeigerinstrumente werden beispielsweise als Tachometer in Kraftfahrzeugen eingesetzt und sind damit bekannt. Dabei hat das Zeigerinstrument in der Regel ein Zeigerantriebssystem, welches den auf einer Zeigerwelle befestigten Zeiger über das Zifferblatt schwenkt. Die Skala ist auf dem Zifferblatt aufgetragen und meist bogenförmig gestaltet.

Häufig ist man bestrebt, auf dem Zeigerinstrument einen Sollwert oder einen Maximalwert als Hinweis für den Fahrer darzustellen. Hierzu wird beispielsweise für die zulässige Höchstgeschwindigkeit in der Stadt zusätzlich zur 50 km/h Markierung eine weitere auffällige Markierung angebracht. Oftmals will man jedoch unterschiedliche Sollwerte signalisieren. Beispielsweise werden heutige Kraftfahrzeuge häufig mit einer Geschwindigkeitsregelanlage ausgerüstet, die auf Wunsch des Fahrers die Geschwindigkeit des Kraftfahrzeuges konstant hält. Weiterhin wurde bereits daran gedacht, Verkehrsschilder für eine Geschwindigkeitsbegrenzung mit einem Sender und Kraftfahrzeuge mit einem Empfänger auszurüsten. Hierdurch kann die aktuelle Geschwindigkeitsbegrenzung auf dem Armaturenbrett angezeigt werden, so daß sich der Fahrer diese nicht mehr merken muß. Man könnte dem Fahrer die eingestellte Geschwindigkeit der Geschwindigkeitsregelanlage oder die aktuelle Geschwindigkeitsbegrenzung mitteilen, indem man auf dem Armaturenbrett eine eigene Anzeige vorsieht. Diese benötigt jedoch unnötig viel Platz und hat den Nachteil, daß sie leicht übersehen werden kann. Bei Barometern sind von Hand verstellbare Zeiger als Markierung bekannt geworden. Solche Zeiger sind jedoch für ein Kraftfahrzeug ungeeignet, da sie beim Einstellen die Aufmerksamkeit des Fahrers beeinträchtigen.

Aus CH-A5-659 321 ist ein Zeigerinstrument mit einem Zeiger, einem eine Skala aufweisenden Zifferblatt und einer Sollwertmarkierung auf dem Zifferblatt bekannt. Mit diesem Zeigerinstrument ist einerseits eine istgeschwindigkeit eines Schienenfahrzeugs und andererseits eine Sollgeschwindigkeit des Fahrzeugs anzeigbar, wobei die Sollgeschwindigkeit durch einzeln ansteuerbare Leuchtelemente einer Anzeigegruppe darstellbar ist.

Ein weiteres Zeigerinstrument mit einem Zeiger und einem eine Skala aufweisenden Zifferblatt offenbart US-A4,1761,715, wobei als Zeiger ein Laserstrahl nach Umlenkung an einem mittels eines Meßwerks bewegbaren optischen Leitblech auf dem Zifferblatt darstellbar ist. Eine Sollwertmarkierung ist bei diesem Instrument nicht vorgesehen.

Außerdem zeigt GB-A-2 183 837 ein für ein Kraftfahrzeug bestimmtes Zeigerinstrument mit einem Zeiger, einem eine Skala aufweisenden Zifferblatt und einer Sollwertmarkierung auf dem Ziffernblatt, wobei die Sollwertmarkierung mittels eines Stellmotors entlang der Skala einstellbar ausgebildet ist. Dieses Dokument befaßt sich mit der Festlegung eines Begrenzungs-Sollwerts, der mittels eines zweiten mechanischen Zeigers angezeigt wird.

Der Erfindung liegt das Problem zugrunde, ein Zeigerinstrument der eingangs genannten Art so zu gestalten, daß der Fahrer beim Ablesen des gemessene Wertes zugleich einen jeweils erforderlichen Sollwert leicht erkennen kann.

Dieses Problem wird erfindungsgemäß gelöst durch die Merkmale des kennzeichnenden Teils des Anspruchs 1.

Die Sollwertmarkierung entlang der Skala ermöglicht es dem Fahrer, den Sollwert zusammen mit dem gemessenen Wert mit einem Blick abzulesen. Weiterhin kann der Fahrer die Werte dabei zueinander in ein Verhältnis setzen, so daß er ohne weitere Vergleiche sieht, ob er beispielsweise die Geschwindigkeitsbegrenzung unter- oder überschreitet. Der Stellmotor dient dazu, die Sollwertmarkierung ständig zu aktualisieren, ohne die Aufmerksamkeit des Fahrers zu beeinträchtigen.

Der Sollwert und der von dem Zeiger angezeigte Wert sind besonders leicht voneinander zu unterscheide, da das Zifferblatt einen bogenförmigen Projektionsbereich aufweist und die Sollwertmarkierung von einer dem Betrachter abgewandten Seite des Zifferblattes in den Projektionsbereich projiziert ist. Hierdurch zeigt der Zeiger wie bei bekannten Zeigerinstrumenten den gemessenen Wert an. Die in den Projektionsbereich projizierte Sollwertmarkierung ist dadurch leicht zu erkennen, ohne daß sie mit dem gemessenen Wert verwechselt werden kann.

Der Projektionsbereich ist gemäß einer vorteilhaften Weiterbildung der Erfindung besonders kostengünstig herstellbar, wenn er ein in das Zifferblatt eingearbeiteter Spalt ist, der lichtdurchlässig ist.

Die Sollwertmarkierung ist sehr gut ablesbar, wenn der Projektionsbereich eine Deckscheibe aus einem durchleuchtbaren oder durchscheinenden Material ist. Durch diese Gestaltung hat der abgelesene Wert keine Abhängigkeit von dem Blickwinkel des Fahrers auf das Zeigerinstrument.

Für die Erzeugung der Sollwertmarkierung ist gemäß einer anderen vorteilhaften Weiterbildung der Erfindung ein besonders geringer mechanischer Aufwand erforderlich, wenn die Sollwertmarkierung von einem Laserstrahl erzeugt ist und der Stellmotor zum Schwenken eines den Laserstrahl in den Projektionsbereich auslenkenden Spiegels ausgebildet ist.

Das Zeigerinstrument gestaltet sich gemäß einer vorteilhaften Weiterbildung der Erfindung besonders platzsparend, wenn hinter dem Projektionsbereich ein bogenförmiger Spiegel angeordnet und wenn der Spiegel des Stellmotors zum Auslenken des Laserstrahls in den bogenförmigen Spiegel ausgebildet ist.

Der Laserstrahl muß aufgeweitet werden, damit er vom Fahrer gesehen werden kann. Wenn der Laserstrahl auf die Deckscheibe projiziert wird, kann diese hierfür beispielsweise eine strukturierte Oberfläche aufweisen. Bei einem Spalt als Projektionsbereich wird die Aufweitung des Laserstrahls einfach dadurch erreicht, daß der bogenförmige Spiegel zur Aufweitung des Laserstrahls ausgebildet ist.

Die Verwendung einer kostenintensiven Laserkanone läßt sich gemäß einer anderen vorteilhaften Weiterbildung der Erfindung vermeiden, wenn der Stellmotor zum Schwenken eines sich von einer Leuchtdiode zu dem Projektionsbereich erstreckenden Lichtleiters ausgebildet ist.

Das Zeigerantriebssystem und der Stellmotor müssen im Zeigerinstrument befestigt und dabei mit elektrischer Energie oder mit elektrischen Signalen versorgt werden. Das erfindungsgemäße Zeigerinstrument gestaltet sich konstruktiv besonders einfach, wenn es eine das Zeigerantriebssystem und den Stellmotor auf jeweils einer Seite tragende Platine hat.

Das Zeigerinstrument gestaltet sich gemäß einer anderen vorteilhaften Weiterbildung der Erfindung besonders platzsparend, wenn das Zeigerantriebssystem und der Stellmotor einander konzentrisch umschließen.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine Draufsicht auf ein erfindungsgemäßes Zeigerinstrument,
- Fig.2: einen Längsschnitt durch das erfindungsgemäße Zeigerinstrument mit einem Laserstrahl als Sollwertmarkierung,
- Fig.3: einen Längsschnitt durch eine zweite Ausführungsform des erfindungsgemäßen Zeigerinstrumentes.

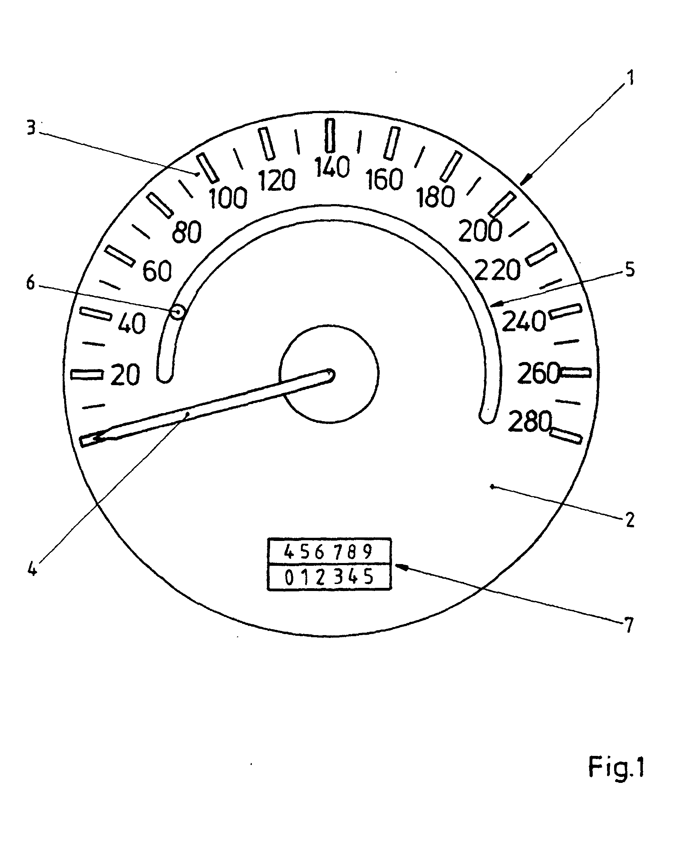

Die Figur 1 zeigt ein als Tachometer ausgebildetes Zeigerinstrument 1 mit einem Zifferblatt 2 und mit einer bogenförmigen Skala 3. Im Zentrum des Zeigerinstrumentes 1 ist ein Zeiger 4 drehbar befestigt. Entlang der Skala 3 erstreckt sich ein Projektionsbereich 5, in den eine Sollwertmarkierung 6 projiziert ist. Weiterhin hat das Zeigerinstrument 1 eine digitale Anzeige 7 für bisher gefahrene Kilometer.

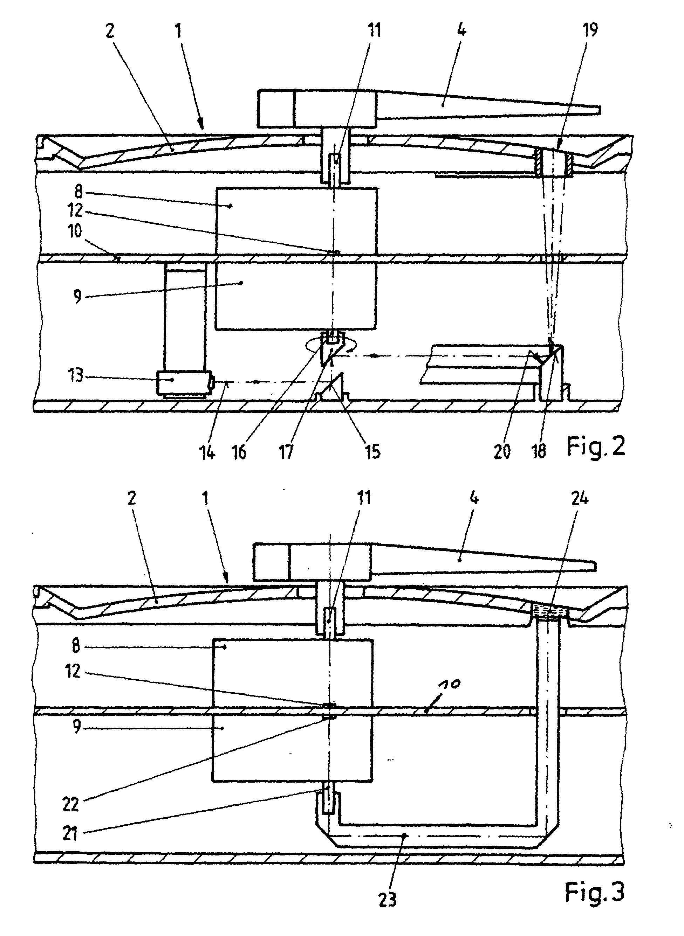

In Figur 2 ist zu erkennen, daß das Zeigerinstrument 1 ein Zeigerantriebssystem 8 und einen Stellmotor 9 hat. Das Zeigerantriebssystem 8 und der Stellmotor 9 sind einander gegenüberliegend auf einer gemeinsamen Platine 10 befestigt. Das Zeigerantriebssystem 8 treibt den auf einer Zeigerwelle 11 befestigten Zeiger 4 an. Zwischen dem Zeigerantriebssystem 8 und dem Zeiger 4 ist das Zifferblatt 2 angeordnet. Auf der Platine 10 ist eine Leuchtdiode 12 befestigt, die in den transparent ausgebildeten Zeiger 4 einstrahlt.

Auf der Seite des Stellmotors 9 hat das Zeigerinstrument 1 eine Laserkanone 13. Die Laserkanone 13 erzeugt einen Laserstrahl 14, der von einem ortsfesten Reflektor 15 auf einen auf einer Welle 16 des Stellmotors 9 befestigten Spiegel 17 umgelenkt wird. Von dem Spiegel 17 gelangt der Laserstrahl 14 auf einen bogenförmigen Spiegel 18, der ihn in einen ebenfalls bogenförmigen Spalt 19 im Zifferblatt 2 umlenkt. Der bogenförmige Spiegel 18 hat zur Aufweitung des Laserstrahls 14 eine Wölbung 20.

Die Ausführungsform des in Figur 3 dargestellten Zeigerinstrumentes 1 unterscheidet sich von der aus Figur 2 dadurch, daß hier auf der Platine 10 eine zweite Leuchtdiode 22 angeordnet ist, welche in eine transparente Welle 21 des Stellmotors 9 und in einen U-förmigen Lichtleiter 23 einstrahlt. Der Lichtleiter 23 ist auf der Welle 21 des Stellmotors 9 befestigt und bis zu einer bogenförmigen Deckscheibe 24 im Zifferblatt 2 geführt.

## Patentansprüche

1. Für ein Kraftfahrzeug bestimmtes Zeigerinstrument mit einem Zeiger (4), einem eine Skala (3) aufweisenden Zifferblatt (2) und einer Sollwertmarkierung (6) auf dem Zifferblatt, (2),
**dadurch gekennzeichnet,**
**daß** die Sollwertmarkierung (6) so angeordnet ist, daß sie mittels eines Stellmotors (9) entlang der Skala (3) einstellbar ist,
**daß** das Zifferblatt (2) einen bogenförmigen Projektionsbereich (5, 19, 24) aufweist und
**daß** die Sollwertmarkierung (6) weiterhin so angeordnet ist, daß sie von einer dem Betrachter abgewandten Seite des Zifferblattes (2) in den Projektionsbereich (5, 19, 24) projizierbar ist.

2. Zeigerinstrument nach Anspruch 1, **dadurch gekennzeichnet, daß** der Projektionsbereich ein in das Zifferblatt (2) eingearbeiteter Spalt (19) ist.

3. Zeigerinstrument nach Anspruch 1, **dadurch gekennzeichnet, daß** der Projektionsbereich eine Deckscheibe (24) aus einem durchleuchtbaren oder durchscheinenden Material ist.

4. Zeigerinstrument nach zumindest einem der vorhergehenden Ansprüche, **dadurch gekennzeichnet, daß** die Sollwertmarkierung (6) von einem Laserstrahl (14) erzeugt ist, und der Stellmotor (9) zum Schwenken eines den Laserstrahl (14) in den Projektionsbereich (5, 19, 24) auslenkenden Spiegels (17) ausgebildet ist.

5. Zeigerinstrument nach Anspruch 4, **dadurch gekennzeichnet, daß** hinter dem Projektionsbereich (5, 19, 24) ein bogenförmiger Spiegel (18) angeordnet und daß der Spiegel (17) des Stellmotors (9) zum Auslenken des Laserstrahls (14) in den bogenförmigen Spiegel (18) ausgebildet ist.

6. Zeigerinstrument nach Anspruch 5, **dadurch gekennzeichnet, daß** der bogenförmige Spiegel (18) zur Aufweitung des Laserstrahls (14) ausgebildet ist.

7. Zeigerinstrument nach zumindest einem der vorhergehenden Ansprüche, **dadurch gekennzeichnet, daß** der Stellmotor (9) zum Schwenken eines sich von einer Leuchtdiode (22) zu dem Projektionsbereich (5, 19, 24) erstreckenden Lichtleiters (23) ausgebildet ist.

8. Zeigerinstrument nach zumindest einem der vorhergehenden Ansprüche, **dadurch gekennzeichnet, daß** es eine das Zeigerantriebssystem (8) und den Stellmotor (9) auf jeweils einer Seite tragende Platine (10) hat.

9. Zeigerinstrument nach zumindest einem der vorhergehenden Ansprüche, **dadurch gekennzeichnet, daß** das Zeigerantriebssystem (8) und der Stellmotor (9) einander konzentrisch umschließen.

## Claims

1. Pointer instrument intended for a motor vehicle, having a pointer (4), a dial (2) having a scale (3), and a set point marker (6) on the dial (2), **characterized in that** the set point marker (6) is arranged such that it can be set along the scale (3) by means of a positioning motor (9), **in that** the dial (2) has an arcuate projection area (5, 19, 24), and **in that** the set point marker (6) is further arranged such that it can be projected into the projection area (5, 19, 24) from a side of the dial (2) averted from the viewer.

2. Pointer instrument according to Claim 1, **characterized in that** the projection area is a slot (13) recessed into the dial (2).

3. Pointer instrument according to Claim 1, **characterized in that** the projection area is a cover plate (24) made from a transilluminable or translucent material.

4. Pointer instrument according to at least one of the preceding claims, **characterized in that** the set point marker (6) is produced by a laser beam (14), and the positioning motor (9) is designed to pivot a mirror deflecting the laser beam (14) into the projection area (5, 19, 24).

5. Pointer instrument according to Claim 4, **characterized in that** an arcuate mirror (18) is arranged behind the projection area (5, 19, 24), and **in that** the mirror (17) of the positioning motor (9) is designed to deflect the laser beam (14) into the arcuate mirror (18).

6. Pointer instrument according to Claim 5, **characterized in that** the arcuate mirror (18) is designed to expand the laser beam (14).

7. Pointer instrument according to at least one of the preceding claims, **characterized in that** the positioning motor (9) is designed to pivot an optical conductor (23) extending from a light-emitting diode (22) to the projection area (5, 19, 24).

8. Pointer instrument according to at least one of the preceding claims, **characterized in that** it has a plate (10) bearing the pointer drive system (8) and the positioning motor (9) on one side respectively.

9. Pointer instrument according to at least one of the preceding claims, **characterized in that** the pointer drive system (8) and the positioning motor (9) surround one another concentrically.

## Revendications

1. Instrument indicateur destiné à un véhicule automobile, comportant une aiguille (4), un cadran gradué (2) présentant une échelle (3) et un repérage de valeur de consigne (6) sur le cadran (2),
**caractérisé**
**en ce que** le repérage de valeur de consigne (6) est disposé de telle façon qu'il puisse être réglé le long de l'échelle (3) à l'aide d'un moteur de positionnement (9),
**en ce que** le cadran (2) présente une zone de projection en forme d'arc (5, 19, 24) et
**en ce que** le repérage de valeur de consigne (6) est, de plus, disposé de telle façon qu'il puisse être projeté dans la zone de projection (5, 19, 24) depuis un côté du cadran (2) opposé au lecteur.

2. Instrument indicateur suivant la revendication 1, **caractérisé en ce que** la zone de projection est une fente (19) pratiquée dans le cadran (2).

3. Instrument indicateur suivant la revendication 1, **caractérisé en ce que** la zone de projection est un disque de recouvrement (24) en matériau translucide ou transparent.

4. Instrument indicateur suivant au moins l'une des revendications précédentes, **caractérisé en ce que** le repérage de valeur de consigne (6) est réalisé par un rayon laser (14) et que le moteur de positionnement (9) est réalisé pour faire dévier un miroir (17) dirigeant le rayon laser (14) dans la zone de projection (5, 19, 24).

5. Instrument indicateur suivant la revendication 4, **caractérisé en ce que**, derrière la zone de projection (5, 19, 24), est disposé un miroir (18) en forme d'arc et que le miroir (17) du moteur de positionnement (9) est réalisé pour orienter le rayon laser (14) vers le miroir en forme d'arc (18).

6. Instrument indicateur suivant la revendication 5, **caractérisé en ce que** le miroir en forme d'arc (18) est réalisé pour élargir le rayon laser (14).

7. Instrument indicateur suivant au moins l'une des revendications précédentes, **caractérisé en ce que** le moteur de positionnement (9) est réalisé pour faire dévier un guide de lumière (23) s'étendant d'une diode lumineuse (22) à la zone de projection (5, 19, 24).

8. Instrument indicateur suivant au moins l'une des revendications précédentes, **caractérisé en ce qu'**il possède une platine (10) portant, sur chacun de ses faces respectives, le système d'entraînement de l'aiguille (8) et le moteur d'entraînement (9).

9. Instrument indicateur suivant au moins l'une des revendications précédentes, **caractérisé en ce que** le système d'entraînement de l'aiguille (8) et le moteur de positionnement sont disposés l'un autour de l'autre concentriquement.
